(19) Europäisches Patentamt
European Patent Office
Office européen des brevets

(11) EP 0 703 932 B1

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(21) Anmeldenummer: **94916969.2**

(22) Anmeldetag: **17.05.1994**

(51) Int Cl.6: **C08F 297/08**

(86) Internationale Anmeldenummer:
**PCT/EP94/01591**

(87) Internationale Veröffentlichungsnummer:
**WO 94/28042 (08.12.1994 Gazette 1994/27)**

(54) **MEHRPHASIGE BLOCKCOPOLYMERISATE DES PROPYLENS**

MULTIPHASE BLOCK COPOLYMERS OF PROPYLENE

COPOLYMERISATS SEQUENCES MULTIPHASES DU PROPYLENE

(84) Benannte Vertragsstaaten:
**BE DE ES FR GB NL**

(30) Priorität: **27.05.1993 DE 4317655**

(43) Veröffentlichungstag der Anmeldung:
**03.04.1996 Patentblatt 1996/14**

(73) Patentinhaber: **BASF Aktiengesellschaft
67063 Ludwigshafen (DE)**

(72) Erfinder:
- **LANGHAUSER, Franz
D-67098 Bad Duerkheim (DE)**
- **KERTH, Juergen
D-67316 Carlsberg (DE)**
- **MUELLER, Patrik
D-67661 Kaiserslautern (DE)**
- **KERSTING, Meinolf
67435 Neustadt (DE)**
- **SCHWEIER, Guenther
D-67159 Friedelsheim (DE)**

(56) Entgegenhaltungen:
**EP-A- 0 373 660**
**EP-A- 0 433 986**
**EP-A- 0 433 990**
**DE-A- 4 130 429**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 703 932 B1

## Beschreibung

Die vorliegende Erfindung betrifft mehrphasige Blockcopolymerisate des Propylens, aus

a) einem Polymerisat des Propylens mit 0 bis 5 Gew.-% weiterer $C_2$-$C_{10}$-Alk-1-ene,

b) einem Copolymerisat des Propylens mit 5 bis 98 Gew.-% weiterer $C_2$-$C_{10}$-Alk-1-ene,

wobei die mehrphasigen Blockccpolymerisate einen Schmelzpunkt von weniger als 155°C, einen Schmelzflußindex von 0,1 bis 100 g/10 min, gemessen bei 230°C unter einem Gewicht von 2,16 kg, aufweisen und eine Steifigkeit (G-Modul) besitzen, die der folgenden Bedingung (I) gehorcht:

$$\text{G-Modul} > 800 \,.\, \frac{M_{a)}}{M_{co}} \qquad \text{(I)}$$

worin $M_{a)}$ für die Menge des Propylenpolymerisats a)
und $M_{co}$ für die Menge des mehrphasigen Blockcopolymerisats steht.

Weiterhin betrifft die Erfindung die Verwendung der so erhaltenen mehrphasigen Blockcopolymerisate zur Herstellung von Fasern, Folien und Formkörpern sowie die hierbei erhältlichen Fasern, Folien und Formkörper aus den so erhaltenen mehrphasigen Blockcopolymerisaten als wesentliche Komponente.

Mehrphasige Blockcopolymerisate finden aufgrund ihres Eigenschaftsprofils in weiten Bereichen Verwendung, beispielsweise im Fahrzeugbau, bei der Herstellung schlagzähmodifizierter Gebrauchsgegenstände wie Hartschalenkoffer oder Kunststoffvorratsgefäßen sowie zur Herstellung von Bürofolien.

Aus der DE-A 38 27 565 und der DE-A 40 01 157 sind Copolymerisate auf der Basis von Propylen und Ethylen bekannt, die mit TitanTrägerkatalysatoren hergestellt werden. Diese Copolymerisate weisen jedoch eine breite Molekulargewichtsverteilung auf, die aus verarbeitungstechnischen Gründen unerwünscht ist. Weiterhin zeichnen sich die aus diesen Offenlegungsschriften bekannten Copolymerisate insbesondere dann durch nicht mehr voll befriedigende mechanische Eigenschaften aus, wenn ihre Schmelzpunkte deutlich verringert sind.

Die EP-A 433 990 beschreibt ein Verfahren zur Herstellung von Blockcopolymerisaten des Propylens, wobei zur Polymerisation ein Metallocenkatalysator verwendet wurde und in der ersten Stufe des zweistufigen Verfahrens ein kristallines Propylenpolymer in flüssigem Monomeren hergestellt wurde. Die darin beschriebenen Blockcopolymerisate weisen insbesondere eine gute Tieftemperaturschlagzähigkeit auf.

Aus der DE-A 41 30 429 ist ein Verfahren zur Herstellung von mehrphasigen Blockcopolymerisaten des Propylens mit Hilfe von Metallocenkatalysatorsystemen bekannt, welches zu Blockcopolymerisaten mit befriedigenden mechanischen Eigenschaften führt. Für einige Anwendungsbereiche ist jedoch die mechanische Formbeständigkeit der bisher bekannten Copolymerisate des Propylens nicht immer ausreichend hoch. Dies ist insbesondere dann der Fall, wenn derartige Copolymerisate einen niedrigen Schmelzpunkt aufweisen, wodurch sie leichter verarbeitbar sind.

Der vorliegenden Erfindung lag daher die Aufgabe zugrunde, den geschilderten Nachteilen abzuhelfen und neue Copolymerisate des Propylens zu entwickeln, die sich u.a. durch eine hohe mechanische Formbeständigkeit bei gleichzeitig leichter Verarbeitbarkeit auszeichnen.

Demgemäß wurden die eingangs definierten mehrphasigen Blockcopolymerisate des Propylens gefunden.

Diese bestehen aus einem Polymerisat des Propylens a) mit 0 bis 5 Gew.-%, insbesondere mit 0 bis 3 Gew.-% weiterer $C_2$-$C_{10}$-Alk-1-ene und aus einem Copolymerisat des Propylens b) mit 5 bis 98 Gew.-%, insbesondere mit 10 bis 96 Gew.-% weiterer $C_2$-$C_{10}$-Alk-1-ene. Besonders bevorzugte Blockcopolymerisate des Propylens enthalten als Polymerisat a) ein Propylenhomopolymerisat und als Copolymerisat b) ein Copolymerisat des Propylens mit 15 bis 95 Gew.-% weiterer $C_2$-$C_{10}$-Alk-1-ene. Unter der Bezeichnung $C_2$-$C_{10}$-Alk-1-ene sollen dabei insbesondere $C_2$-$C_8$-Alk-1-ene wie beispielsweise Ethylen, But-1-en, Pent-1-en, Hex-1-en, Hept-1-en oder Oct-1-en sowie Gemische aus mehreren dieser Alk-1-ene verstanden werden. Bevorzugte $C_2$-$C_{10}$-Alk-1-ene sind Ethylen und But-1-en sowie Gemische aus beiden Alk-1-enen.

Gegebenenfalls können die erfindungsgemäßen Blockcopolymerisate auch aus zwei oder mehreren voneinander verschiedenen Copolymerisaten des Propylens b) bestehen, wobei sich diese sowohl in bezug auf den Gehalt des einpolymerisierten $C_2$-$C_{10}$-Alk-1-ens als auch in bezug auf die Art des einpolymerisierten $C_2$-$C_{10}$-Alk-1-ens unterscheiden können. Bevorzugt sind jedoch zweiphasige Blockcopolymerisate mit einem Copolymerisat b).

Die erfindungsgemäßen mehrphasigen Blockcopolymerisate weisen einen Schmelzflußindex von 0,1 bis 100 g/10 min, insbesondere von 0,5 bis 50 g/10 min, bei 230°C und unter einem Gewicht von 2,16 kg auf. Der Schmelzflußindex entspricht dabei derjenigen Menge an Polymerisat in Gramm, die innerhalb von 10 Minuten aus der

nach DIN 53 735 genormten Prüfvorrichtung bei einer Temperatur von 230°C und unter einem Gewicht von 2,16 kg ausgepreßt wird.

Vorzugsweise bestehen die erfindungsgemäßen mehrphasigen Blockcopolymerisate aus 20 bis 98 Gew.-%, insbesondere aus 50 bis 90 Gew.-% des Polymerisats a) und aus 2 bis 80 Gew.-%, insbesondere aus 10 bis 50 Gew.-% des oder der Copolymerisate b).

Die erfindungsgemäßen mehrphasigen Blockcopolymerisate des Propylens sind weiterhin charakterisiert durch einen Schmelzpunkt von weniger als 155°C, insbesondere von weniger als 150°C und eine Steifigkeit (G-Modul), welche der folgenden Bedingung (I) gehorcht:

$$\text{G-Modul} > 800 \cdot \frac{M_{a)}}{M_{co}} \qquad (I)$$

wobei $M_{a)}$ für die Menge des Propylenpolymerisats a) und $M_{co}$ für die Menge des mehrphasigen Blockcopolymerisats steht. Die Bezeichnung Menge bezieht sich dabei auf die Gewichtsmenge des Polymerisats a) bzw. des Blockcopolymerisats. Unter der Bezeichnung mehrphasiges Blockcopolymerisat soll dabei das Gesamtpolymerisat bestehend aus dem Propylenpolymerisat a) und dem Copolymerisat b) verstanden werden.

Der Schmelzpunkt des mehrphasigen Blockcopolymerisate wird dabei mittels Differential Scanning Calorimetry (DSC) bestimmt, die Steifigkeit nach DIN 53 455. Die hierbei angewandten Prüfungsverfahren sind dem durchschnittlichen Fachmann geläufig.

Die erfindungsgemäßen mehrphasigen Blockcopolymerisate des Propylens können unter Umständen neben üblichen Additiven noch pro 100 Gew.-Teile des mehrphasigen Blockcopolymerisats 0,01 bis 5 Gew.-Teile, insbesondere 0,05 bis 2 Gew.-Teile eines Nukleierungsmittels enthalten. Übliche Nukleierungsmittel sind dabei u.a. mineralische Zusatzstoffe wie Talkum, Kieselsäure oder Kaolin, organische Verbindungen wie Mono- und Polycarbonsauren sowie deren Salze, Polymerisate wie Ethylen-Acrylester-Copolymerisate, ferner Salze von Diestern der Phosphorsäure. Als besonders bevorzugtes-Nukleierungsmittel wird Dibenzylidensorbitol oder eines seiner $C_1$-$C_8$-alkylsubstituierten Derivate verwendet. Die Nukleierungsmittel werden den erfindungsgemäßen mehrphasigen Blockcopolymerisaten in üblichen Mischvorrichtungen, beispielsweise in Trommelmischern, Mühlen, Extrudern, Walzwerken oder Knetern beigemengt.

Die erfindungsgemäßen mehrphasigen Blockcopolymerisate sind erhältlich durch mehrstufige Polymerisation, wobei man bevorzugt zunächst in einer ersten Polymerisationsstufe bei Temperaturen im Bereich von 0 bis 100°C und Drücken im Bereich von 1 bis 300 bar Propylen, gegebenenfalls in Anwesenheit weiterer $C_2$-$C_{10}$-Alk-1-ene, polymerisiert und dem daraus erhältlichen Polymerisat a) anschließend in einer zweiten Polymerisationsstufe bei Temperaturen im Bereich von 0 bis 100°C und Drücken von 1 bis 300 bar ein Gemisch aus Propylen und weiteren $C_2$-$C_{10}$-Alk-1-enen hinzupolymerisiert. Besonders bevorzugte Polymerisationsbedingungen sind dabei in beiden Polymerisationsstufen Temperaturen im Bereich von 20 bis 100°C und Drücke im Bereich von 5 bis 150 bar.

Die Polymerisation kann in Lösung, in Emulsion, in Suspension, in Masse oder in der Gasphase durchgeführt werden. Besonders bevorzugt ist die Gasphasenpolymerisation, insbesondere bei Temperaturen im Bereich von 30 bis 100°C, bevorzugt 50 bis 90°C, und Drükken im Bereich von 5 bis 40 bar, bevorzugt 15 bis 35 bar.

Die zur Herstellung der erfindungsgemäßen mehrphasigen Blockcopolymerisate eingesetzten Katalysatorsysteme enthalten als aktive Bestandteile u.a. Metallocenkomplexe von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über $\pi$-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem $C_1$- bis $C_{10}$-Alkyl, beispielsweise einer Methyl-, Ethyl-, Propyl- oder Butylgruppe, verknüpft sein kann.

Besonders geeignete Metallocenkomplexe lassen sich durch folgende allgemeine Formel II kennzeichnen:

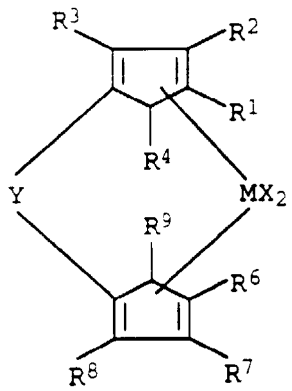

II

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^5$, |
| wobei $R^5$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^4$ und $R^6$ bis $R^9$ | Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome aufweisende cyclische gesättigte, teilweise gesättigte oder ungesättigte Gruppen stehen können, oder $Si(R^{10})_3$ mit |
| $R^{10}$ | $C_1$- bis $C_{10}$-Alkyl, $C_6$- bis $C_{15}$-Aryl oder $C_3$- bis $C_{10}$-Cycloalkyl, |
| Y | für $R^{11}R^{12}Z<$ oder |

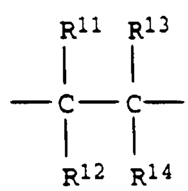

steht,

| | |
|---|---|
| wobei Z | Silicium, Germanium, Zinn oder Kohlenstoff bedeutet, |
| $R^{11}$, $R^{12}$, $R^{13}$, $R^{14}$ | Wasserstoff, $C_1$- bis $C_{10}$-Alkyl, $C_3$- bis $C_{10}$-Cycloalkyl oder $C_6$- bis $C_{15}$-Aryl, wobei gegebenenfalls auch zwei benachbarte Reste gemeinsam für 4 bis 15 C-Atome aufweisende cyclische Gruppen stehen können. |

Von den Verbindungen der Formel II sind diejenigen besonders geeignet, in denen

| | |
|---|---|
| $R^1$ und $R^6$ | gleich sind und für Wasserstoff oder $C_1$- bis $C_{10}$-Alkylgruppen stehen, |
| $R^4$ und $R^9$ | gleich sind und für Wasserstoff, eine Methyl-, Ethyl-, iso-Propyl- oder tert.-Butylgruppe stehen, |
| $R^2$, $R^3$, $R^7$ und $R^8$ | die Bedeutung<br>$R^3$ und $R^8$ $C_1$ bis $C_4$-Alkyl |

$R^2$ und $R^7$ Wasserstoff
haben oder zwei benachbarte Reste $R^2$ und $R^3$ sowie $R^7$ und $R^8$ gemeinsam für 4 bis 12 C-Atome aufweisende cyclische Gruppen stehen,

$R^{11}$, $R^{12}$, $R^{13}$ und $R^{14}$ für Wasserstoff oder $C_1$- bis $C_8$-Alkyl,

M für Zirkonium oder Hafnium und

X für Chlor stehen.

Beispiele für besonders geeignete Komplexverbindungen sind u.a.

Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis (cyclopentadienyl)-zirkoniumdichlorid,
Ethylenbis (indenyl)-zirkoniumdichlorid,
Ethylenbis (tetrahydroindenyl)-zirkoniumdichlorid,
Ethylenbis(-2-methylindenyl)-zirkoniumdichlorid,
Ethylenbis (-2-methylindenyl)-hafniumdichlorid,
Ethylenbis (-2-methylbenzindenyl)-zirkoniumdichlorid,
Ethylenbis (-2-methylbenzindenyl)-hafniumdichlorid,
Dimethylmethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylbenzindenyl)-zirkoniumdichlorid, und
Dimethylsilandiylbis(-2-methylindenyl)-hafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metallocenkomplexe können auch in kationischer Form vorliegen, wie in der EP-A 277 003 und der EP-A 277 004 beschrieben wird.

Neben den Metallocenkomplexen enthalten die zur Herstellung der erfindungsgemäßen Blockcopolymerisate eingesetzten Katalysatorsysteme noch oligomere Aluminiumoxidverbindungen. Geeignet sind beispielsweise offenkettige oder cyclische Alumoxanverbindungen der allgemeinen Formeln III oder IV

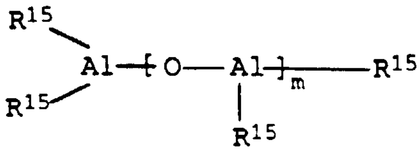

III

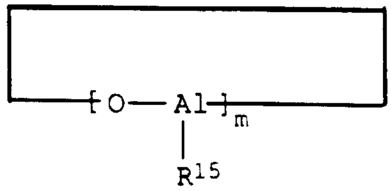

IV

wobei $R^{15}$ eine $C_1$- bis $C_4$-Alkylgruppe, bevorzugt Methyl- oder Ethylgruppe bedeutet und m für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1, liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Bei der Herstellung der erfindungsgemäßen mehrphasigen Blockcopolymerisate des Propylens hat es sich als vorteilhaft erwiesen, wenn ein getragertes Katalysatorsystem eingesetzt wird. Geeignete Trägermaterialien sind beispielsweise Kieselgele, bevorzugt solche der Formel $SiO_2 \cdot a\, Al_2O_3$, worin a für eine Zahl im Bereich von 0 bis 2 steht, vorzugsweise 0 bis 0,5; dies sind im wesentlichen Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. Silica Gel 332 der Fa. Grace.

Bei einem besonders bevorzugten Verfahren zur Herstellung der erfindungsgemäßen mehrphasigen Blockcopolymerisate des Propylens stellt man zuerst das Trägermaterial für den Katalysator her, dann erfolgt die Herstellung des getragerten Katalysatorkomplexes und anschließend die Polymerisation.

Bei der Herstellung des Trägermaterials hat es sich als vorteilhaft erwiesen, die feuchten Kieselgele in Kohlenwasserstoffen, vorzugsweise in Heptan, zu suspendieren und mit Trialkylaluminium; vorzugsweise mit Triethylaluminium, zu versetzen, zu filtrieren und zu trocknen.

Zur Herstellung des geträgerten Katalysatorkomplexes geht man vorzugsweise so vor, daß man den Metallocenkomplex der allgemeinen Formel II mit Lösungsmittel versetzt, insbesondere mit Toluol, und hierzu eine Lösung von oligomeren Alumoxanverbindungen der allgemeinen Formeln III oder IV gibt, vorzugsweise Methylalumoxan, wobei als Lösungsmittel insbesondere dasjenige verwendet wird, welches auch beim Metallocenkomplex eingesetzt wurde, also bevorzugt Toluol. Anschließend wird das Trägermaterial zugegeben, wobei das Gewichtsverhältnis von Katalysator zu Trägermaterial 10:1 bis 1000:1 ausmacht, bevorzugt 100:1 bis 500:1. Anschließend wird das Lösungsmittel entfernt und man erhält ein Katalysatorpulver.

Die eigentliche Polymerisation wird in der ersten Stufe bevorzugt in der Gasphase durchgeführt, wobei man üblicherweise in einem Autoklaven Polypropylengrieß vorlegt und mit Trialkylaluminium, vorzugsweise Triethylaluminium, welches als Cokatalysator dient, versetzt. Das Gewichtsverhältnis von Polypropylengrieß zu Trialkylaluminium beträgt i.a. 10:1 bis 10 000:1, bevorzugt 20:1 bis 200:1. Anschließend gibt man 30 Gew.-%, bezogen auf die Menge an Trialkylaluminium, an Trägerkatalysator zu, heizt auf Temperaturen bis 100°C, bevorzugt 70°C, auf und erhöht den Innendruck durch Propylenzufuhr bis auf 50 bar, vorzugsweise auf 28 bar. Danach erfolgt die eigentliche Polymerisation, wobei verbrauchtes Propylen kontinuierlich durch neues Propylen ersetzt wird. Für den Fall, daß das in der ersten Polymerisationsstufe erhaltene Polymerisat a) noch weitere $C_2$-$C_{10}$-Alk-1-ene enthält, wird entsprechend kontinuierlich ein Gemisch aus Propylen und einem oder mehreren weiteren $C_2$-$C_{10}$-Alk-1-enen hinzugefügt, wobei das Partialdruckverhältnis zwischen Propylen und den weiteren $C_2$-$C_{10}$-Alk-1-enen bei 10:1 bis 10 000:1, bevorzugt bei 20:1 bis 5000:1 liegt.

In Anwesenheit des in der ersten Polymerisationsstufe verwendeten Metallocenkatalysators erfolgt danach in der zweiten Polymerisationsstufe die Herstellung des Copolymerisats b), üblicherweise in Gegenwart des Polymerisats a). Dazu wird vorzugsweise das Polymerisat a) zusammen mit dem Metallocenkatalysatorsystem aus der ersten Polymerisationsstufe ausgetragen und in die zweite Polymerisationsstufe übergeführt, wo ein Gemisch aus Propylen und einem oder mehreren $C_2$-$C_{10}$-Alk-1-enen hinzupolymerisiert wird. Dabei kann es sich empfehlen, weitere Metallocenkatalysatoren der allgemeinen Formel II sowie gegebenenfalls auch Alumoxanverbindungen der allgemeinen Formeln III oder IV hinzuzufügen. Hierbei arbeitet man üblicherweise bei einem Druck von 5 bis 40 bar, insbesondere von 10 bis 40 bar, sowie einer Temperatur von 30 bis 80°C, insbesondere von 40 bis 75°C, wobei die verbrauchten Comonomere kontinuierlich durch neue Comonomere ersetzt werden. Dabei ist vorzugsweise ein Partialdruckverhältnis zwischen Propylen und dem oder den weiteren $C_2$-$C_{10}$-Alk-1-enen von 0,01:1 bis 100:1, insbesondere von 0,05 bis 20:1 einzustellen. Durch Veränderung des Partialdruckverhältnisses sowie durch Hinzufügen eines anderen $C_2$-$C_{10}$-Alk-1-ens kannen in der zweiten Polymerisationsstufe unter Umständen auch zwei oder mehrere verschiedene Copolymerisate b) hergestellt werden. Nach beendeter Polymerisation wird der Autoklav entspannt.

Neben einem Autoklaven kann das zu den erfindungsgemäßen mehrphasigen Blockcopolymerisaten führende Verfahren auch in anderen üblichen Reaktoren durchgeführt werden, beispielsweise in einer Reaktorkaskade. Das Verfahren kann sowohl kontinuierlich, halbkontinuierlich als auch diskontinuierlich ausgeführt werden.

Das Molekulargewicht der dabei erhältlichen Polymerisate kann wie üblich durch Zugabe von Reglern, insbesondere von Wasserstoff kontrolliert werden. Weiterhin ist es möglich, Inertgase wie Stickstoff oder Argon mitzuverwenden.

Die erfindungsgemäßen mehrphasigen Blockcopolymerisate des Propylens weisen einen abgesenkten Schmelzpunkt, eine enge Molmassenverteilung $\overline{Mw/Mn}$ (Verhältnis Gewichtsmittel der Molmasse -$\overline{Mw}$- zum Zahlenmittel der Molmasse -$\overline{Mn}$-) sowie eine hohe mechanische Formbeständigkeit auf, was insbesondere in Form von hohen Steifigkeitswerten zum Ausdruck kommt. Die erfindungsgemäßen Blockcopolymerisate lassen sich gut verarbeiten, sind in vielen Bereichen anwendbar und eignen sich insbesondere zur Herstellung von Folien, Fasern und Formkörpern.

## Beispiele

### Beispiel 1

a) Herstellung des Trägermaterials

Zu einer Suspension von 20,2 g Kieselgel (Fa. Grace, SG 332, Teilchendurchmesser 20 - 45 µm) in 200 ml Heptan wurden bei Raumtemperatur während 30 min 56 ml einer Lösung von 6,4 g Triethylaluminium in 48 ml Heptan zugetropft. Dabei stieg die Temperatur auf 44°C an. Nach 18 Stunden Rühren bei Raumtemperatur wurde abfiltriert, zweimal mit je 30 ml Pentan gewaschen und anschließend am Ölpumpenvakuum getrocknet.

b) Herstellung der geträgerten Metallocenkomponente

Zu 50 µmol Dimethylsilandiyl-bis(2-methylbenzo[e]-indenyl)zirkondichlorid (29 mg) in 20 ml Toluol wurden 13,1 ml (20 mmol) einer Lösung von Methylalumoxan in Toluol (1,53 molar, Fa. Witco GmbH) gegeben und 15 min gerührt. Anschließend wurden 5 g des Trägermaterials zugegeben und weitere 30 min gerührt. Zuletzt wurde das Lösungsmittel bei Raumtemperatur im Laufe von 4 Stunden am Ölpumpenvakuum entfernt. Es entstand ein gut rieselfähiges Katalysatorpulver.

c) Polymerisation

In einem trockenen, mit Stickstoff gespülten 10-Liter-Autoklaven wurden nacheinander 50 g Polypropylengrieß und 4,8 ml Triethylaluminium (1 molare Lösung in Heptan) gegeben und 15 min gerührt. Anschließend wurden 1,5 g des Trägerkatalysators im Stickstoff-Gegenstrom in den Reaktor gefüllt und dieser verschlossen. Bei einer Rührerdrehzahl von 350 U/min wurde auf 70°C aufgeheizt und gleichzeitig der Innendruck stufenweise durch Propylenzufuhr bis zum Enddruck von 28 bar erhöht. Anschließend wurde 1,5 Stunden polymerisiert, wobei durch die automatische Druckregelung Frischpropylen nachgeführt wurde.

Anschließend wurde in der zweiten Polymerisationsstufe Propylen und Ethylen hinzupolymerisiert. Hierzu wurde der Druck auf 7,5 bar entspannt, danach durch Ethylenzufuhr zunächst auf 15 bar erhöht und anschließend auf 9,5 bar eingestellt. Über einen Zeitraum von 30 Minuten wurde ein Gemisch aus Propylen und Ethylen kontinuierlich in der Gasphase polymerisiert, wobei ein Partialdruckverhältnis zwischen Propylen und Ethylen von 1:1 eingehalten wurde. Die Polymerisationstemperatur betrug 70°C. Nach beendeter Polymerisation wurde 10 Minuten lang auf Atmosphärendruck entspannt und das entstandene Blockcopolymerisat danach im Stickstoffstrom ausgetragen.

### Beispiel 2

Es wurde analog dem Beispiel 1 polymerisiert, wobei man in der zweiten Polymerisationsstufe anstelle von 30 Minuten nur 15 Minuten polymerisierte.

Beispiel 3

Es wurde analog dem Beispiel 1 polymerisiert, wobei man in der ersten Polymerisationsstufe anstelle von 90 Minuten nur 60 Minuten lang polymerisierte.

Beispiel 4

Es wurde analog dem Beispiel 1 polymerisiert, wobei man in der ersten Polymerisationsstufe anstelle von 90 Minuten nur 60 Minuten und in der zweiten Polymerisationsstufe anstelle von 30 Minuten 45 Minuten lang polymerisierte.

Die Zusammensetzungen und Eigenschaften der mehrphasigen Blockcopolymerisate sind in der folgenden Tabelle zusammengestellt.

Die Viskosität wurde mittels eines Viskosimeters nach Ubbelohde bestimmt, der Gewichtsmittelwert $\overline{M}_w$ und der Zahlenmittelwert $\overline{M}_n$ durch Gelpermeationschromatographie und der Schmelzpunkt durch DSC-Messungen (Differential Scanning Calorimetry). Die Bestimmung des G-Modul erfolgte nach DIN 53455.

Tabelle

| Beispiel | 1 | 2 | 3 | 4 |
|---|---|---|---|---|
| AtomverhAltnis Aluminium:Zirkonium | 800:1 | 800:1 | 800:1 | 800:1 |
| Anteil Polymerisat a) am Blockcopolymerisat [Gew.-%] | 80 | 90 | 60 | 50 |
| Anteil Copolymerisat b) am Blockcopolymerisat [Gew.-%] | 20 | 10 | 40 | 50 |
| Produktivität Menge Polymerisat/Menge Trägerkatalysator | 2750 | 3210 | 2530 | 2995 |
| Ausbeute [g] | 1833 | 2140 | 1687 | 1997 |
| Gewichtsmittel ($\overline{M}_w$) | 376000 | 310000 | 401000 | 417000 |
| Molmassenverhältnis ($\overline{M}w/\overline{M}n$) | 1,87 | 1,83 | 1,98 | 2,01 |
| Schmelzpunkt [°C] | 144,2 | 145,6 | 143,2 | 143,1 |
| Steifigkeit (G-Modul) [N/mm$^2$] | 675 | 770 | 515 | 410 |

**Patentansprüche**

**1.** Mehrphasige Blockcopolymerisate des Propylens, aus

a) einem Polymerisat des Propylens mit 0 bis 5 Gew.-% weiterer $C_2$-$C_{10}$-Alk-1-ene,

b) einem Copolymerisat des Propylens mit 5 bis 98 Gew.-% weiterer $C_2$-$C_{10}$-Alk-1-ene,

wobei die mehrphasigen Blockcopolymerisate einen Schmelzpunkt von weniger als 155°C, eine Schmelzflußindex von 0,1 bis 100 g/10 min, gemessen bei 230°C unter einem Gewicht von 2,16 kg, aufweisen und eine Steifigkeit (G-Modul) besitzen, die der folgenden Bedingung (I) gehorcht:

$$\text{G-Modul} > 800 \cdot \frac{M_{a)}}{M_{co}} \qquad (I)$$

worin $M_{a)}$ für die Menge des Propylenpolymerisats a) und $M_{co}$ für die Menge des mehrphasigen Blockcopolymerisats steht.

2. Mehrphasige Blockcopolymerisate nach Anspruch 1, enthaltend 20 bis 98 Gew.-% des Polymerisats a) und 2 bis 80 Gew.-% des Copolymerisats b).

3. Mehrphasige Blockcopolymerisate nach den Ansprüchen 1 bis 2, enthaltend pro 100 Gew.-Teile des mehrphasigen Blockcopolymerisats 0,01 bis 5 Gew.-Teile eines Nukleierungsmittels.

4. Mehrphasige Blockcopolymerisate nach den Ansprüchen 1 bis 3, wobei das Polymerisat a) ein Propylenhomopolymerisat ist.

5. Mehrphasige Blockcopolymerisate nach den Ansprüchen 1 bis 4, erhältlich durch mehrstufige Polymerisation von Propylen und gegebenenfalls weiteren $C_2$-$C_{10}$-Alk-1-enen in Gegenwart von Katalysatorsystemen, die als aktive Bestandteile Metallocenkomplexe von Metallen der IV. und V. Nebengruppe des Periodensystems und oligomere Aluminiumoxidverbindungen enthalten.

6. Mehrphasige Blockcopolymerisate nach Anspruch 5, wobei als Metallocenkomplexe von Metallen der IV. und V. Nebengruppe des Periodensystems Metallocenkomplexe der allgemeinen Formel II:

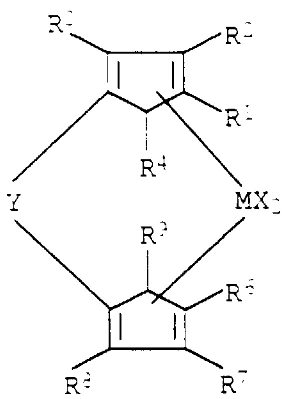

II

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^5$, |
| wobei $R^5$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^4$ und $R^6$ bis $R^9$ | Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-atome aufweisende cyclische gesättige, teilweise gesättigte oder ungesättigte Gruppen stehen können, oder $Si(R^{10})_3$ mit |
| $R^{10}$ | $C_1$- bis $C_{10}$-Alkyl, $C_6$- bis $C_{15}$-Aryl oder $C_3$- bis $C_{10}$-Cycloalkyl, |
| Y | für $R^{11}R^{12}Z\langle$ oder |

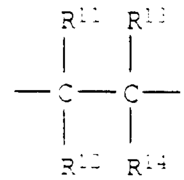

steht,

wobei Z Silicium, Germanium, Zinn oder Kohlenstoff bedeutet,

$R^{11}$, $R^{12}$, $R^{13}$, $R^{14}$, Wasserstoff, $C_1$- bis $C_{10}$-Alkyl, $C_3$- bis $C_{10}$-Cycloalkyl oder $C_6$- bis $C_{15}$-Aryl, wobei gegebenenfalls auch zwei benachbarte Reste gemeinsam für 4 bis 15 C-Atome aufweisende cyclische Gruppen stehen können,

eingesetzt werden und als oligomere Aluminiumoxidverbindungen offenkettige oder cyclische Alumoxanverbindungen der allgemeinen Formeln III oder IV

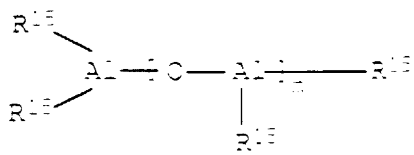

III

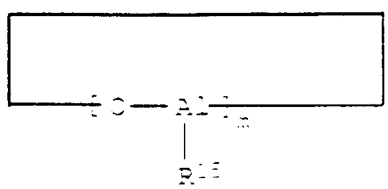

IV

wobei $R^{15}$ eine $C_1$- bis $C_4$-Alkylgruppe bedeutet und m für eine ganze Zahl von 5 bis 30 steht.

**7.** Verfahren zur Herstellung von mehrphasigen Blockcopolymerisaten gemäß den Ansprüchen 1 bis 6, wobei man in einer ersten Polymerisationsstufe bei Temperaturen im Bereich von 0 bis 100°C und Drücken im Bereich von 1 bis 300 bar Propylen, gegebenenfalls in Anwesenheit weiterer $C_2$-$C_{10}$-Alk-1-ene, polymerisiert und dem daraus erhältlichen Polymerisat a) anschließend in einer zweiten Polymerisationsstufe bei Temperaturen im Bereich von 0 bis 100°C und Drücken im Bereich von 1 bis 300 bar ein Gemisch aus Propylen und weiteren $C_2$-$C_{10}$-Alk-1-enen hinzupolymerisiert, wobei diese mehrstufige Polymerisation in Gegenwart von Katalysatorsystemen, die als aktive Bestandteile Metallocenkomplexe von Metallen der IV. und V. Nebengruppe des Periodensystems und oligomere Aluminiumoxidverbindungen enthalten, durchgeführt wird.

**8.** Verfahren nach Anspruch 7, wobei man die Polymerisation in der ersten und in der zweiten Polymerisationsstufe in der Gasphase durchführt.

**9.** Verwendung der mehrphasigen Blockcopolymerisate des Propylens gemäß den Ansprüchen 1 bis 6 zur Herstellung von Fasern, Folien und Formkörpern.

**10.** Fasern, Folien und Formkörper, erhältlich aus den mehrphasigen Blockcopolymerisaten gemäß den Ansprüchen 1 bis 6.

## Claims

1. Multiphase block copolymers of propylene, comprising

   a) a polymer of propylene with from 0 to 5% by weight of further $C_2$-$C_{10}$ 1-alkenes,

   b) a copolymer of propylene with from 5 to 98% by weight of further $C_2$-$C_{10}$ 1-alkenes,

   the multiphase block copolymers having a melting point of less than 155°C, a melt flow index of from 0.1 to 100 g/10 min, measured at 230°C under a weight of 2.16 kg, and a stiffness (shear modulus G) conforming to the following condition (I):

$$\text{G modulus} > 800 \times \frac{M_{a)}}{M_{co}} \qquad \text{(I)}$$

   where $M_{a)}$ denotes the amount of propylene polymer a)
   and $M_{co}$ denotes the amount of the multiphase block copolymer.

2. Multiphase block copolymers as claimed in claim 1, comprising from 20 to 98% by weight of polymer a) and from 2 to 80% by weight of copolymer b).

3. Multiphase block copolymers as claimed in claim 1 or 2, comprising from 0.01 to 5 parts by weight of a nucleating agent per 100 parts by weight of the multiphase block co-polymer.

4. Multiphase block copolymers as claimed in any of claims 1 to 3, wherein polymer a) is a propylene homopolymer.

5. Multiphase block copolymers as claimed in any of claims 1 to 4, obtainable by multistage polymerization of propylene and optionally further $C_2$-$C_{10}$ 1-alkenes in the presence of catalyst systems comprising, as active constituents, metallocene complexes of metals of subgroups IV and V of the Periodic Table and oligomeric aluminum oxide compounds.

6. Multiphase block copolymers as claimed in claim 5, wherein the metallocene complexes of metals of subgroups IV and V of the Periodic Table are metallocene complexes of the general formula II:

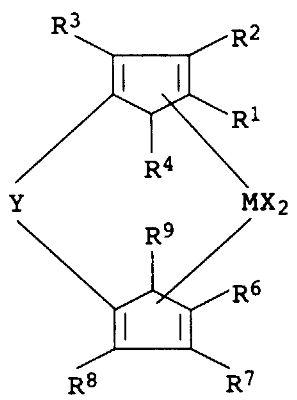

II

where

| | |
|---|---|
| M | is titanium, zirconium, hafnium, vanadium, niobium or tantalum, |
| X | is fluorine, chlorine, bromine, iodine, hydrogen, $C_1$-$C_{10}$ alkyl, $C_6$-$C_{15}$ aryl or $-OR^5$, |
| where $R^5$ | is $C_1$-$C_{10}$ alkyl, $C_6$-$C_{15}$ aryl, alkylaryl, arylalkyl, fluoroalkyl or fluoroaryl having in each case from 1 to 10 carbon atoms in the alkyl moiety and from 6 to 20 carbon atoms in |

the aryl moiety,

$R^1$ to $R^4$ and $R^6$ to $R^9$ are each hydrogen, $C_1$-$C_{10}$ alkyl, 5-, 6- or 7-membered cycloalkyl which in turn may carry $C_1$-$C_{10}$ alkyl substituents, $C_6$-$C_{15}$ aryl or arylalkyl, in which case it is also possible, if desired, for two adjacent radicals to be combined into cyclic saturated, partially saturated or unsaturated groups having from 4 to 15 carbon atoms, or $Si(R^{10})_3$ where

$R^{10}$ is $C_1$-$C_{10}$ alkyl, $C_6$-$C_{15}$ aryl or $C_3$-$C_{10}$ cycloalkyl,

Y is $R^{11}R^{12}Z<$ or

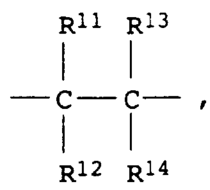

where z is silicon, germanium, tin or carbon,

R11, R12, R13 and R14 are each hydrogen, $C_1$-$C_{10}$ alkyl, $C_3$-$C_{10}$ cycloalkyl or $C_6$-$C_{15}$ aryl, in which case it is also possible, if desired, for two adjacent radicals to be combined into cyclic groups having from 4 to 15 carbon atoms,

and the oligomeric aluminum oxide compounds are open-chain or cyclic alumoxane compounds of the general formulae III or IV

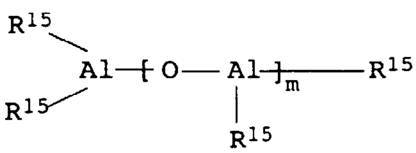

III

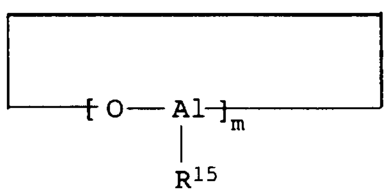

IV

where $R^{15}$ is $C_1$-$C_4$ alkyl and m is an integer from 5 to 30.

7. A process for producing multiphase block copolymers as claimed in any of claims 1 to 6, which comprises conducting a first polymerization stage at temperatures within the range from 0 to 100°C and pressures within the range from 1 to 300 bar to polymerize propylene, optionally in the presence of further $C_2$-$C_{10}$ 1-alkenes, and then conducting a second polymerization stage at temperatures within the range from 0 to 100°C and pressures within the range from 1 to 300 bar to polymerize a mixture of propylene and further $C_2$-$C_{10}$ 1-alkenes onto the polymer a) obtainable from the first polymerization stage, this multistage polymerization being carried out in the presence of catalyst systems comprising, as active constituents, metallocene complexes of metals of subgroups IV and V of the Periodic Table and oligomeric aluminum oxide compounds.

8. A process as claimed in claim 7, wherein the polymerization of the first and second polymerization stages is carried out in the gas phase.

**9.** The use of the multiphase block copolymers of propylene of any of claims 1 to 6 for producing fibers, films/sheets and shaped articles.

**10.** Fibers, films/sheets and shaped articles obtainable from the multiphase block copolymers of any of claims 1 to 6.

## Revendications

**1.** Copolymères séquencés du propylène multiphase, constitués de

a) un polymère du propylène comportant de 0 à 5% en poids d'autres alc-1-ènes en $C_1$ à $C_{10}$,
b) un copolymère du propylène comportant de 5 à 98% en poids d'autres alc-1-ènes en $C_1$ à $C_{10}$,

où les copolymères séquencés multiphase possèdent un point de fusion inférieur à 155°C, un indice d'écoulement à l'état fondu de 0,1 à 100 g/10 min, mesuré à 230°C sous un poids de 2,16 kg, et possèdent une rigidité (module G) qui obéit à la relation (I) qui suit :

$$\text{module G} > 800 \cdot \frac{M_{a)}}{M_{co}} \qquad (I)$$

dans laquelle Ma) représente la quantité du polymère du propylène a),
et $M_{co}$ représente la quantité du copolymère séquence multiphase.

**2.** Copolymères séquencés multiphase suivant la revendication 1, qui contiennent de 20 à 98% en poids du polymère a) et de 2 à 80% en poids du copolymère b).

**3.** Copolymères séquencés multiphase suivant les revendications 1 et 2, qui contiennent, pour 100 parties en poids du copolymère séquencé multiphase, 0,01 à 5 parties en poids d'un agent de nucléation.

**4.** Copolymères séquencés multiphase suivant l'une quelconque des revendications 1 et 2, caractérisés en ce que le polymère a) est un homopolymère du propylène.

**5.** Copolymères séquencés multiphase suivant l'une quelconque des revendications 1 à 4, caractérisés en ce qu'on peut les obtenir par la polymérisation à stades multiples du propylène et, éventuellement d'autres alc-1-ènes en $C_1$ à $C_{10}$ en présence de systèmes catalytiques qui contiennent, à titre de constituants actifs, des complexes de métallocènes de métaux du IVème et du Vème sous-groupes du systèmes périodiques et des composés d'oxyde d'aluminium oligomériques.

**6.** Copolymères séquencés multiphase suivant la revendication 5, caractérisés en ce que, à titre de complexes de métallocènes de métaux du IVème et du Vème sous-groupe du système périodique, on utilise des complexes de métallocènes de la formule générale II :

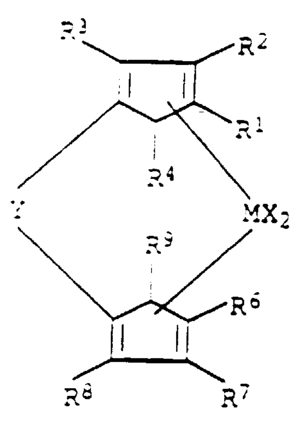

(II)

dans laquelle les substituants ont les significations qui suivent :

M représente le titane, le zirconium, l'hafnium, le vanadium, le niobium ou le tantale,
X représente le fluor, le chlore, le brome, l'iode, l'hydrogène, un radical alkyle en $C_1$ à $C_{10}$, aryle en $C_6$ à $C_{15}$, ou $-OR^5$,
où $R^5$ représente un radical alkyle en $C_1$ à $C_{10}$, aryle en $C_6$ à $C_{15}$, alkylaryle, arylalkyle, fluoralkyle ou fluoraryle comportant à chaque fois de 1 à 10 atomes de carbone dans le reste alkyle et de 6 à 20 atomes de carbone dans le reste aryle,
$R_1$ à $R_4$ et $R_6$ à $R_9$ représentent des atomes d'hydrogène, des radicaux alkyle en $C_1$ à $C_{10}$, cycloalkyle penta- à heptavalent, qui peut, à son tour, porter des radicaux alkyle en $C_1$ à $C_{10}$, comme substituants, aryle en $C_5$ à $C_{15}$ ou arylalkyle, où éventuellement aussi deux restes voisins peuvent représenter en commun des radicaux cycliques présentant de 4 à 15 atomes de carbone, saturés, partiellement saturés ou insaturés, ou des radicaux $Si(R^{10})_3$, où
$R^{10}$ représente un radical alkyle en $C_1$ à $C_{10}$, aryle en $C_6$ à $C_{15}$, ou cycloalkyle en $C_3$ à $C_{10}$
Y représente $R^{11}R^{12}Z<$ ou

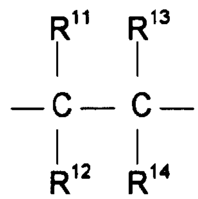

où Z représente le silicium, le germanium, l'étain ou le carbone,
$R^{11}$, $R^{12}$, $R^{13}$, $R^{14}$ représentent des atomes d'hydrogène, des radicaux alkyle en $C_1$ à $C_{10}$, cycloalkyle en $C_3$ à $C_{10}$, ou aryle en $C_6$ à $C_{15}$, où éventuellement aussi deux restes voisins peuvent représenter en commun des radicaux cycliques présentant de 4 à 15 atomes de carbone,
et, à titre de composés d'oxyde d'aluminium oligomériques, des composés d'alumoxannes à chaîne ouverte ou cyclique, des formules III ou IV :

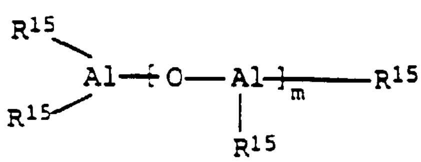

(III)

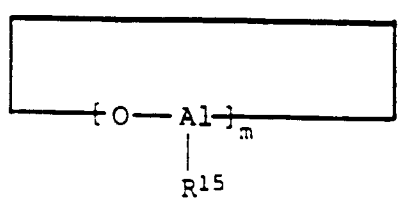

(IV)

où $R^{15}$ représente un radical alkyle en $C_1$ à $C_4$ et m représente un nombre entier dont la valeur varie de 5 à 30.

**7.** Procédé de préparation de copolymères séquencés multiphase suivant l'une quelconque des revendications 1 à 6, caractérisé en ce que, au cours d'un premier stade de polymérisation, on polymérise le propylène, à des températures qui varient dans la plage de 0 à 100°C et sous des pressions qui varient dans la plage de 1 à 300 bars, éventuellement en présence d'autres alc-1-ènes en $C_2$ à $C_{10}$ et, ensuite, au cours d'un second stade de polymérisation, on incorpore par polymérisation au polymère a) qui en est obtenu, un mélange de propylène et d'autres alc-1-ènes en $C_2$ à $C_{10}$, à des températures qui varient dans la plage de 0 à 100°C et sous des pressions qui

varient dans la plage de 1 à 300 bars, où on entreprend cette polymérisation à stades multiples en présence de systèmes catalytiques qui contiennent, à titre de constituants actifs, des complexes de métallocènes de métaux du IVème et du Vème sous-groupe du système périodique et des composés d'oxyde d'aluminium oligomériques.

**8.** Procédé suivant la revendication 7, caractérisé en ce que l'on entreprend la polymérisation au cours du premier stade et du second stade de polymérisation en phase gazeuse.

**9.** Utilisation des copolymères séquencés du propylène multiphase suivant l'une quelconque des revendications 1 à 6 pour la fabrication de fibres, de feuilles et d'articles moulés.

**10.** Fibres, feuilles et articles moulés, que l'on peut obtenir à partir des copolymères séquencés multiphase suivant l'une quelconque des revendications 1 à 6.